# EUROPEAN PATENT SPECIFICATION

(11) **EP 3 132 487 B1**
(45) Date of publication and mention of the grant of the patent: **21.11.2018**
(21) Application number: 15779267.2
(22) Date of filing: 14.04.2015
(51) Int. Cl.: H01M 10/0525, H01M 10/0567, H01M 4/38, H01M 4/525, H01M 4/505

(54) **ELECTROLYTE FORMULATIONS**
ELEKTROLYTFORMULIERUNGEN
FORMULATIONS D'ÉLECTROLYTE

(30) Priority: 15.04.2014 US 201461979693 P
(43) Date of publication of application: 22.02.2017
(73) Proprietor: Wildcat Discovery Technologies, Inc., San Diego, California 92121 (US)
(72) Inventor: STRAND, Deidre, San Diego, California 92131 (US); CALDWELL, Marissa, San Diego, California 92103 (US); CHENG, Gang, San Diego, California 92130 (US)
(74) Representative: Williams Powell
(86) International application number: PCT/US2015/025703
(87) International publication number: WO 2015/160773

(56) References cited:
- WO-A1-2013/004945
- US-A- 6 136 477
- US-A1- 2006 177 741
- US-A1- 2009 311 611
- US-A1- 2011 065 003
- US-A1- 2011 217 599
- YANG, YUAN ET AL.: 'High-capacity micrometer-sized Li2S particles as cathode materials for advanced rechargeable lithium-ion batteries' JOURNAL OF THE AMERICAN CHEMICAL SOCIETY vol. 134, no. 37, 21 August 2012, ISSN 0002-7863 pages 15387 - 15394, XP055216686

## Description

### BACKGROUND OF THE INVENTION

The present invention is in the field of battery technology and, more particularly, electrolyte formulations that address challenges encountered during the use of silicon anodes in lithium ion batteries.

Lithium ion batteries enjoy relatively widespread use, but research continues into improving the energy density, capacity, and cycle life of these batteries. For example, silicon has been used as an anode material to improve the energy density of lithium ion cells. Silicon anodes can provide high energy density to lithium ion batteries due to the high theoretical capacity of silicon, which is 4200 mAh/g. However, the silicon particles that make up the anode can undergo larges changes in their volume during battery cycling. The volumetric changes on lithiation and delithiation cycles can be as large as about 300%

These large volumetric changes in the silicon anode material can have negative effects on battery cycle life. A number of mechanisms may contribute to poor cycle life. For example, silicon particles can fracture due to the large stresses in the material brought on by the large changes in volume during cycling. These fractures can result in electrically isolated particle fragments that can no longer contribute to the capacity during cycling. Even when silicon particles do not completely fracture, the large stresses in the anode material can result in cracks in the particle and delamination of the particle surface. These cracks and delaminations can result in portions of the active material being electrically isolated and unable to contribute to the capacity during cycling.

As another example of a failure mechanism, the solid-electrolyte interphase (SEI) that forms on the surface of silicon anode particles tends to not be mechanically robust. The result is cracking and delamination of this thin SEI layer on the particles. Since SEI is formed during the battery cycling, more SEI is formed on each cycle to replace the cracked or delaminated SEI. But, this is not ideal because forming the SEI irreversibly consumes battery capacity and creates gas products. Generally, the SEI should be formed on the initial cycles and should not need to be reformed.

Thus, there exists a need for an electrolyte formulation for silicon anodes in a lithium ion battery that improves cycle life. These and other challenges can be addressed by certain embodiments of the invention described herein.

### BRIEF SUMMARY OF THE INVENTION

Embodiments of the present invention are additives to electrolytes that enable the formation of comparatively more robust SEI films on silicon anodes. The SEI films in these embodiments are seen to be more robust in part because the batteries containing these materials have higher coulombic efficiency and longer cycle life that comparable batteries without such additives.

Embodiments of the present invention include the methods of making such electrolytes using the additives disclosed herein, the methods of forming batteries including such electrolytes using the additives disclosed herein, and using batteries including such electrolytes using the additives disclosed herein.

### BRIEF DESCRIPTION OF SEVERAL VIEWS OF THE DRAWINGS

Figure 1 depicts the results of electrochemical characterization of certain embodiments of the invention in an ethylene carbonate based electrolyte formulation.
Figure 2 depicts the results of electrochemical characterization of certain embodiments of the invention in a propylene carbonate based electrolyte formulation.

### DETAILED DESCRIPTION OF THE INVENTION

The following definitions apply to some of the aspects described with respect to some embodiments of the invention. These definitions may likewise be expanded upon herein. Each term is further explained and exemplified throughout the description, figures, and examples. Any interpretation of the terms in this description should take into account the full description, figures, and examples presented herein.

The singular terms "a," "an," and "the" include the plural unless the context clearly dictates otherwise. Thus, for example, reference to an object can include multiple objects unless the context clearly dictates otherwise.

The terms "substantially" and "substantial" refer to a considerable degree or extent. When used in conjunction with an event or circumstance, the terms can refer to instances in which the event or circumstance occurs precisely as well as instances in which the event or circumstance occurs to a close approximation, such as accounting for typical tolerance levels or variability of the embodiments described herein.

The term "about" refers to the range of values approximately near the given value in order to account for typical tolerance levels, measurement precision, or other variability of the embodiments described herein.

A "C-rate" refers to either (depending on context) the discharge current as a fraction or multiple relative to a "1 C" current value under which a battery (in a substantially fully charged state) would substantially fully discharge in one hour, or the charge current as a fraction or multiple relative to a "1 C" current value under which the battery (in a substantially fully discharged state) would substantially fully charge in one hour.

Ranges presented herein are inclusive of their endpoints. Thus, for example, the range 1 to 3 includes the values 1 and 3 as well as the intermediate values.

A lithium ion battery formed in accordance with embodiments of the invention includes an anode, a cathode, and a separator that is disposed between the anode and the cathode. The battery also includes an electrolyte formulation, which is disposed between the anode and the cathode.

The operation of the battery is based upon reversible intercalation and deintercalation of lithium ions into and from the host materials of the anode and the cathode. Other implementations of the battery are contemplated, such as those based on conversion chemistry. The voltage of the battery is based on redox potentials of the anode and the cathode, where lithium ions are accommodated or released at a lower potential in the anode and a higher potential in the cathode. Certain embodiments of the electrolyte formulation disclosed herein are suitable for use with both conventional cathode materials and with high voltage cathode materials.

To allow both a higher energy density and a higher voltage platform to deliver that energy, the cathode can include an active cathode material for high voltage operations at or above 4.2 V. Suitable high voltage cathode materials include those capable of stable operation up to about 6.0 V, up about 5.5 V, up to about 5.0 V, and up to about 4.5 V.

Examples of suitable high voltage cathode materials include phosphates, fluorophosphates, fluorosulfates, fluorosilicates, spinels, lithium-rich layered oxides, and composite layered oxides. Further examples of suitable cathode materials include: spinel structure lithium metal oxides, layered structure lithium metal oxides, lithium-rich layered structured lithium metal oxides, lithium metal silicates, lithium metal phosphates, metal fluorides, metal oxides, sulfur, and metal sulfides.

For example, a class of suitable high voltage spinels can be represented as: Liₐ(M1_{b}M2_{c}M3_{d}M4ₑ)_{f}O₄, where M1, M2, M3, and M4 can be the same or different, M1 is Mn or Fe, M2 is Mn, Ni, Fe, Co, or Cu, M3 is a transition metal, such as Ti, V, Cr, Mn, Fe, Co, Ni, Zr, Nb, or Mo, and M4 is a transition metal or a main group element, optionally excluding elements of Group VIA and Group VIIA, 1.2 ≥ a ≥ 0.9 (or 1.2 > a > 0.9), 1.7 ≥ b ≥ 1.2 (or 1.7 > b > 1.2), 0.8 ≥ c ≥ 0.3 (or0.8 > c > 0.3), 0.1 ≥ d ≥ 0 (or 0.1 > d > 0), 0.1 ≥ e ≥ 0 (or 0.1 > e > 0), and 2.2 ≥ f ≥ 1.5 (or 2.2 > f > 1.5). LMNO-type cathode materials, such as Li_{1.05}Mni_{1.5}Ni_{0.5}O₄ and LMO-type materials, such as LiMn₂O₄ are included in this class.

For example, a class of suitable high voltage, lithium-rich layered oxides can be represented as: Li(LiₐM1_{b}M2_{c}M3_{d}M4ₑ)_{f}O₂, where M1, M2, M3, and M4 can be the same or different, M1 is a transition metal, such as Mn, Fe, V, Co, or Ni, M2 is a transition metal, such as Mn, Fe, V, Co, or Ni, M3 is a transition metal, such as Mn, Fe, V, Co, or Ni, M4 is a transition metal or a main group element, optionally excluding elements of Group VIA and Group VIIA, 0.4 ≥ a ≥ 0.05 (or 0.4 > a > 0.05), 0.7 ≥ b ≥ 0.1 (or 0.7 > b > 0.1), 0.7 ≥ c ≥ 0.1 (or 0.7 > c > 0.1), 0.7 ≥ d ≥ 0.1 (or 0.7 > d > 0.1), 0.2 ≥ e ≥ 0 (or 0.2 > e > 0), and 1.2 ≥ f ≥ 0.9 (or 1.2 > f > 0.9). The term "OLO" refers to an over-lithiated oxide material and such cathode materials are included in this class.

For example, a class of suitable high voltage, composite layered oxides can be represented as: (Li₂M1ₐM2_{b}O₃)_{c} (LiM3_{d}M4ₑM5_{f}O₂)_{g}, where M1, M2, M3, M4, and M5 can be the same or different, M1 is a transition metal, such as Mn, Fe, V, Co, or Ni, M2 is a transition metal, such as Mn, Fe, V, Co, or Ni, M3 is a transition metal, such as Mn, Fe, V, Co, or Ni, M4 is a transition metal, such as Mn, Fe, V, Co, or Ni, M5 is a transition metal or a main group element, optionally excluding elements of Group VIA and Group VIIA, 1.1 ≥ a ≥ 0 (or 1.1 > a > 0), 0.5 ≥ b ≥ 0 (or 0.5 > b > 0), 0.7 ≥ c ≥ 0 (or 0.7 > c > 0), 1 ≥ d ≥ 0 (or 1 > d > 0), 1 ≥ e ≥ 0 (or 1 > e > 0), 1 ≥ f ≥ 0 (or 1 > f > 0), and 1 ≥ g ≥ 0.5 (or 1 > g > 0.5). In some embodiments disclosed herein, electrolyte solutions formulated to contain specific additive types can improve energy density, capacity, and cycle life of these batteries.

Examples of suitable salts include lithium containing salts for use in lithium ion batteries, such as lithium hexafluorophosphate (LiPF₆), lithium perchlorate (LiClO₄), lithium tetrafluoroborate (LiBF₄), lithium trifluoromethane sulfonate (LiCF₃SO₃), lithium bis(trifluoromethane sulfonyl) imide (LiN(CF₃SO₂)₂), lithium bis(perfluoroethyl sulfonyl) imide (LiN(CF₃CF₂SO₂)₂), lithium bis(oxalato)borate (LiB(C₂O₄)₂), lithium difluoro oxalato borate (LiF₂BC₂O₄), and combinations thereof.

The electrolyte formulations disclosed herein can be prepared using a variety of techniques, such as by mixing the base electrolyte and the combinations of additives, dispersing the additives and/or combinations of additives within the base electrolyte, dissolving the additives and/or combinations of additives within the base electrolyte, or otherwise placing these components in contact with one another. The additives and/or combinations of additives can be provided in a liquid form, a powdered form (or another solid form), or a combination thereof. The additives and/or combinations of additives can be incorporated in the electrolyte solutions prior to, during, or subsequent to battery assembly.

When an electrolyte includes a base conventional electrolyte, during initial battery cycling components within the base electrolyte can assist in the *in-situ* formation of a protective film in the form of a solid-electrolyte interface (SEI) on or next to the anode. The anode SEI can decrease or inhibit reductive decomposition of the conventional electrolyte. The electrolyte formulations having the additives and/or combinations of additives disclosed herein can assist in the formation of more stable anode SEI.

Electrolyte formulations including the additives and/or combinations of electrolyte additives disclosed herein can form comparatively robust SEI films on cathode surfaces. Certain of the electrolyte formulations can inhibit or prevent the decomposition of lithium salts (including, but not limited to, LiPF₆) at higher voltage and high temperature. The robust SEI films and stable lithium salts can mitigate gas generation in batteries containing these electrolyte formulations.

Most electrolyte formulations for silicon anodes (and for the more common carbon anodes) contain ethylene carbonate (EC). EC plays an important role in the formation of a stable SEI on carbon anodes. EC also participates in SEI formation on silicon, but, as discussed above, the SEI formed on silicon anodes using conventional electrolytes (including EC) is not mechanically robust. The lack of mechanical robustness is evidenced by poor coulombic efficiency and cycle life.

In certain embodiments, additives disclosed herein result in improved coulombic efficiency and cycle life when used in electrolyte formulations containing EC. Further, in certain embodiments additives provide performance improvements when used in non-EC containing formulations. Non-EC organic solvent for electrolytes are known, and include, but are not limited to, dimethyl carbonate, diethyl carbonate, ethyl methyl carbonate, and propylene carbonate.

Some of the additives were chosen based on hypotheses concerning the effects the additive may have on the SEI layer on the silicon anode. Desired effects include improving the mechanical properties of the SEI, increasing the ratio of organic components to inorganic components in the SEI, increasing the thickness of the SEI, and/or improving the uniformity of the SEI.

Improvement was demonstrated in full cells containing LiNi_{0.4}Mn_{0.4}Co_{0.2}O₂ (NMC) cathodes and silicon alloy anodes using certain electrolyte additives disclosed herein. Certain additives can improve coulombic efficiency and cycle life by forming a more mechanically robust SEI layer on the silicon anode. This may be due to a more polymeric nature of the resulting SEI or a greater ratio of organic components as compared to inorganic components in the SEI.

Other cathode materials may be suitable for use. Examples of suitable cathode materials include phosphates, fluorophosphates, fluorosulfates, fluorosilicates, spinels, Li-rich layered oxides, and composite layered oxides. Further examples of suitable cathode materials include: spinel structure lithium metal oxides, layered structure lithium metal oxides, lithium-rich layered structured lithium metal oxides, lithium metal silicates, lithium metal phosphates, metal fluorides, metal oxides, sulfur, and metal sulfides.

### METHODS

*Battery Cell Assembly.* Battery cells were formed in a high purity argon filled glove box (M-Braun, O₂ and humidity content < 0.1 ppm). A LiNi_{0.4}Mn_{0.4}CO_{0.2}O₂ (NMC) cathode material and a silicon alloy anode were used. Each battery cell includes the composite cathode film, a polypropylene separator, and composite anode film. Electrolyte components were formulated and added to the battery cell.

*Formation.* The formation cycle for NMC//Si cells was 12 hours open current voltage (OCV) hold, followed by a C/10 charge to 4.2V with a constant voltage (CV) hold to C/20, and then a C/10 discharge to 2.8V. Cycling was continued at C/5 charge to 4.2V with a CV hold to C/20 followed by a C/5 discharge to 2.8V.

### RESULTS

Table 1 presents additives in EC-containing formulations that result in improved or similar coulombic efficiency (CE) and improved cycle life compared to an EC-based carbonate electrolyte (ethylene carbonate / ethyl methyl carbonate (EC/EMC)) without the additives. Additives were formulated in EC/EMC (1:2 by volume) with 1M LiPF₆ at the stated weight percent. All results are averages of two cells. Electrolyte formulations containing the listed additives in NMC//silicon cells resulted in up to a 3% improvement in capacity retention at Cycle 50 compared to EC/EMC control without the additives.

**Table 1. Additives in EC-containing formulations**

| **Additive Category** | **Additive wt%** | **Additive** | **CE (50th cycle, %)** | **Capacity Retention (50th cycle, %)** |
|---|---|---|---|---|
| Lactone | 2.0 | 3,6-dimethyl-1,4-dioxane-2,5-dione | 99.6 | 86.4 |
| Carbonate | 0.5 | 4,4-dimethyl-5-methylene-(1,3) dioxolan-2-one | 99.5 | 86.1 |
| Imide | 0.5 | succinimide | 99.2 | 86.0 |
| Imide | 0.5 | 1-acetyl-2-pyrrolidone | 99.4 | 85.8 |
| Imide | 2.0 | N-(benzyloxycarbonyloxy) succinimide | 99.0 | 85.7 |
| Polymer | 0.5 | poly(methyl vinyl ether-alt-maleic anhydride) | 99.7 | 85.6 |
| Weak Lewis Base | 0.5 | tris(2,2,2-trifluoroethyl)phosphite | 99.4 | 85.5 |
| Carbonate | 0.5 | 6,7-dimethyl-2,4-dioxabicyclo[3.2.0]hept6-en-3-one | 99.4 | 85.5 |
| Carbonate | 0.5 | vinylene carbonate | 99.8 | 85.5 |
| B-containing | 2.0 | tris(pentafluorophenyl) borane | 99.5 | 85.4 |
| Carbonate | 2.0 | 6,7-dimethyl-2,4-dioxabicyclo[3.2.0]hept6-en-3-one | 99.4 | 85.3 |
| N-Containing | 2.0 | 4-fluorophenyl isocyanate | 99.4 | 85.2 |
| Carbonate | 2.0 | fluoroethylene carbonate | 99.7 | 85.2 |
| N-Containing | 2.0 | 4-fluorophenyl isocyanate | 99.1 | 85.2 |
| Inorganic | 2.0 | lithium nitrate | 99.4 | 85.2 |
| Imide | 2.0 | succinimide | 99.0 | 85.1 |
| Imide | 2.0 | succinimide | 99.3 | 85.0 |
| Imide | 0.5 | N-(benzyloxycarbonyloxy) succinimide | 99.5 | 84.9 |
| Isocyanate | 0.5 | 4-fluorophenyl isocyanate | 99.3 | 84.9 |
| Polymer | 2.0 | poly(methyl vinyl ether-alt-maleic anhydride) | 99.8 | 84.9 |
| Lactone | 2.0 | glycolide | 99.4 | 84.8 |
| Lactone | 0.5 | 3,6-dimethyl-1,4-dioxane-2,5-dione | 99.5 | 84.8 |
| Carbonate | 2.0 | fluoroethylene carbonate | 99.7 | 84.8 |
| Anhydride | 2.0 | Itaconic anhydride | 99.3 | 84.7 |
| Polymer | 2.0 | polyacrylonitrile | 99.3 | 84.7 |
| Carbonate | 2.0 | vinylene carbonate | 99.8 | 84.7 |
| Weak Lewis Base | 0.5 | tris(2,2,2-trifluoroethyl)phosphite | 99.4 | 84.6 |
| Polymer | 0.5 | poly(vinyl acetate) | 99.3 | 84.6 |
| N-Containing | 0.5 | 4-fluorophenyl isocyanate | 99.4 | 84.6 |
| Carbonate | 2.0 | 4,4-dimethyl-5-methylene-(1,3) dioxolan-2-one | 99.5 | 84.6 |
| --- | 0 | none | 99.3 | 83.8 |

Table 2 presents additives in non-EC containing formulations that result in similar or improved coulombic efficiency (CE) and improved cycle life compared to a non-EC based electrolyte (propylene carbonate / ethyl methyl carbonate (PC/EMC)) without the additives. Additives were formulated in PC/EMC (1:4 by volume) with 1M LiPF₆ at the stated weight percent. All results are averages of two cells. Electrolyte formulations containing the listed additives in NMC//silicon cells resulted in up to a 30% improvement in capacity retention at cycle 50 compared to PC/EMC control without the additives.

**Table 2. Additives in non-EC-containing formulations**

| **Additive Category** | **Additive wt%** | **Additive** | **CE (50th Cycle, %)** | **Capacity Retention (50th Cycle, %)** |
|---|---|---|---|---|
| Inorganic | 2.0 | lithium nitrate | 99.6 | 87.8 |
| Inorganic | 0.5 | lithium nitrate | 99.6 | 85.6 |
| Carbonate | 0.5 | vinylene carbonate | 99.2 | 85.2 |
| Anhydride | 2.0 | phenylmaleic anhydride | 99.3 | 85.0 |
| Carbonate | 2.0 | vinylene carbonate | 99.7 | 84.0 |
| Inorganic | 2.0 | lithium nitrate | 99.3 | 83.7 |
| Anhydride | 2.0 | phenylmaleic anhydride | 99.1 | 83.1 |
| Imide | 2.0 | 1-acetyl-2-pyrrolidone | 98.8 | 82.8 |
| Carbonate | 2.0 | vinylene carbonate | 99.7 | 82.8 |
| Carbonate | 2.0 | fluoroethylene carbonate | 99.7 | 82.4 |
| Imide | 2.0 | 1-acetyl-2-pyrrolidone | 98.9 | 80.5 |
| Carbonate | 2.0 | fluoroethylene carbonate | 99.6 | 80.4 |
| Anhydride | 2.0 | citraconic anhydride | 98.7 | 79.2 |
| B-containing | 2.0 | lithium difluoro(oxalato)borate | 99.0 | 77.0 |
| Imide | 2.0 | N-(benzyloxycarbonyloxy) succinimide | 98.5 | 76.6 |
| Anhydride | 0.5 | succinic anhydride | 98.0 | 74.9 |
| Carbonate | 2.0 | tert-butyl-phenylcarbonate | 98.3 | 74.6 |
| Isocyanate | 2.0 | 2,4,5-trifluorophenyl isocyanate | 98.5 | 74.5 |
| Carbonate | 2.0 | tert-butyl-phenylcarbonate | 98.3 | 74.5 |
| Isocyanate | 2.0 | 4-fluorophenyl isocyanate | 98.7 | 74.3 |
| Anhydride | 2.0 | succinic anhydride | 98.7 | 73.7 |
| Anhydride | 2.0 | methylsuccinic anhydride | 98.5 | 72.7 |
| B-containing | 2.0 | lithium difluoro(oxalato)borate | 98.7 | 72.3 |
| Anhydride | 2.0 | maleic anhydride | 98.2 | 72.1 |
| Carbonate | 0.5 | vinylene carbonate | 98.5 | 71.9 |
| Carbonate | 2.0 | vinyl ethylene carbonate | 98.5 | 71.9 |
| Isocyanate | 0.5 | 4-fluorophenyl isocyanate | 98.0 | 71.5 |
| Anhydride | 0.5 | succinic anhydride | 98.1 | 71.4 |
| Anhydride | 2.0 | citraconic anhydride | 98.0 | 71.2 |
| Isocyanate | 0.5 | 2,4,5-trifluorophenyl isocyanate | 97.8 | 71.2 |
| Inorganic | 2.0 | sodium perchlorate | 97.6 | 70.3 |
| Inorganic | 2.0 | sodium hexafluorophosphate | 98.0 | 70.2 |
| Isocyanate | 2.0 | 3-fluorophenyl isocyanate | 97.8 | 70.1 |
| Imide | 2.0 | succinimide | 97.7 | 69.7 |
| --- | 0 | none | 97.8 | 63.9 |

Table 3 presents additives in non-EC containing formulations that result in similar coulombic efficiency (CE) and similar cycle life compared to an EC-based electrolyte (EC/EMC) without the additives. That is, the formulations that performed well from Table 2 are collected and compared to the control formulation of Table 1. The importance of this comparison is that the control formulation of Table 2 performs poorly as compared to the control formulation of Table 1. While it is important for the purposes of Table 2 to compare the additives to an identical formulation without the additives, it is more practical to ultimately compare the successful additives to the conventional EC/EMC control formulation. Notably, the additives in Table 3 do not appear to require EC to form the SEI as the solvent system for the additive electrolytes was PC/EMC.

**Table 3. Additives in non-EC-containing formulations**

| **Additive Category** | **Additive wt%** | **Additive** | **CE (50th Cycle, %)** | **Avg. Capacity Retention (50th Cycle, %)** |
|---|---|---|---|---|
| Inorganic | 2.0 | lithium nitrate | 99.6 | 87.8 |
| Inorganic | 0.5 | lithium nitrate | 99.6 | 85.6 |
| Carbonate | 0.5 | vinylene carbonate | 99.2 | 85.2 |
| Anhydride | 2.0 | phenylmaleic anhydride | 99.3 | 85.0 |
| Carbonate | 2.0 | vinylene carbonate | 99.7 | 84.0 |
| Inorganic | 2.0 | lithium nitrate | 99.3 | 83.7 |
| Anhydride | 2.0 | phenylmaleic anhydride | 99.1 | 83.1 |
| Imide | 2.0 | 1-acetyl-2-pyrrolidone | 98.8 | 82.8 |
| Carbonate | 2.0 | vinylene carbonate | 99.7 | 82.8 |
| Carbonate | 2.0 | fluoroethylene carbonate | 99.7 | 82.4 |
| Imide | 2.0 | 1-acetyl-2-pyrrolidone | 98.9 | 80.5 |
| Carbonate | 0.5 | fluoroethylene carbonate | 99.6 | 80.4 |
| Anhydride | 2.0 | citraconic anhydride | 98.7 | 79.2 |
| B-containing | 2.0 | lithium difluoro(oxalato)borate | 99.0 | 77.0 |
| Imide | 2.0 | N-(benzyloxycarbonyloxy) succinimide | 98.5 | 76.6 |
| --- | 0 | none | 99.3 | 83.8 |

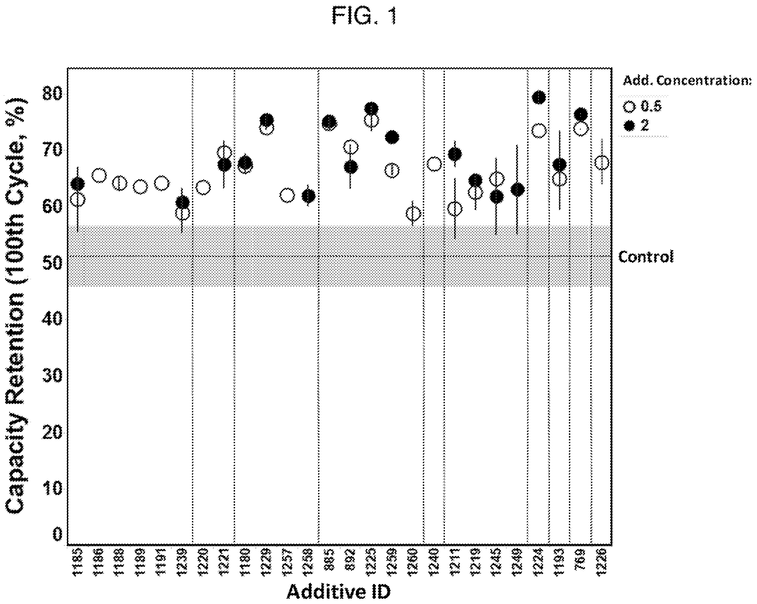

Table 4 presents additives in EC-containing formulations that result in improved capacity retention at the 100th cycle and improved or comparable coulombic efficiency (CE) at the 100th cycle as compared to an EC-based carbonate electrolyte (ethylene carbonate / ethyl methyl carbonate (EC/EMC)) without the additives. Additives were formulated in EC/EMC (1:2 by volume) with 1M LiPF₆ at the stated weight percent. All results are averages of two cells. The data in Table 4 are sorted in order of decreasing capacity retention, with the control formulation having no additives listed first. Figure 1 graphically depicts the capacity retention results of Table 4, with the additives in Figure 1 identified by the ID numbers presented parenthetically in Table 4. Table 4 facilitates identification of concentration dependence or inverse dependence in the additives. The capacity retention of the control is labeled.

**Table 4. Performance of electrolyte additives in EC based electrolyte**

| **Additive Category** | **Additive Name (Additive ID)** | **Additive wt%** | **Cap. Reten. (%, 100th)** | **CE (%, 100th)** |
|---|---|---|---|---|
| --- | none | 0 | 51.2 ± 5.3 | 97.4 |
| Inorganic | lithium nitrate (1224) | 2.0 | 79.4 | 99.5 |
| Carbonate | fluoroethylene carbonate (1225) | 2.0 | 77.4 | 99.6 |
| Polymer | poly(methyl vinyl ether-alt-maleic anhydride) (769) | 2.0 | 76.4 | 99.1 |
| Carbonate | fluoroethylene carbonate (1225) | 0.5 | 75.5 | 99.6 |
| B-containing | lithium difluoro(oxalato)borate (1229) | 2.0 | 75.4 | 99.4 |
| Carbonate | vinylene carbonate (885) | 2.0 | 75.2 | 99.3 |
| Carbonate | vinylene carbonate (885) | 0.5 | 74.7 | 99.3 |
| B-containing | lithium difluoro(oxalato)borate (1229) | 0.5 | 74.0 | 99.2 |
| Polymer | poly(methyl vinyl ether-alt-maleic anhydride) (769) | 0.5 | 73.8 | 99.1 |
| Inorganic | lithium nitrate (1224) | 0.5 | 73.5 | 98.9 |
| Carbonate | 4,4-dimethyl-5-methylene-(1,3) dioxolan-2-one (1259) | 2.0 | 72.4 | 99.3 |
| Carbonate | vinyl ethylene carbonate (892) | 0.5 | 70.6 | 99.3 |
| Anion receptor | triisopropyl borate (1221) | 0.5 | 69.6 | 98.3 |
| Imide | succinimide (1211) | 2.0 | 69.4 | 98.4 |
| Weak Lewis Base | tris(2,2,2-trifluoroethyl)phosphite (1226) | 0.5 | 67.9 | 98.5 |
| B-containing | lithium bis(oxalato)borate (1180) | 2.0 | 67.8 | 99.0 |
| Furan | 2,3,-dihydrofuran (1240) | 0.5 | 67.5 | 98.7 |
| Lactone | 3,6-dimethyl-1,4-dioxane-2,5-dione (1193) | 2.0 | 67.5 | 98.4 |
| Anion receptor | triisopropyl borate (1221) | 2.0 | 67.5 | 98.9 |
| B-containing | lithium bis(oxalato)borate (1180) | 0.5 | 67.3 | 99.1 |
| Carbonate | vinyl ethylene carbonate (892) | 2.0 | 67.1 | 99.3 |
| Carbonate | 4,4-dimethyl-5-methylene-(1,3) dioxolan-2-one (1259) | 0.5 | 66.5 | 98.4 |
| Anhydride | glutaric anhydride (1186) | 0.5 | 65.6 | 98.8 |
| Lactone | 3,6-dimethyl-1,4-dioxane-2,5-dione (1193) | 0.5 | 65.0 | 98.6 |
| Imide | succinimide (1245) | 0.5 | 64.9 | 99.0 |
| Imide | 1-acetyl-2-pyrrolidone)1219) | 2.0 | 64.7 | 98.1 |
| Anhydride | phenylmaleic anhydride (1191) | 0.5 | 64.2 | 100.5 |
| Anhydride | itaconic anhydride (1188) | 0.5 | 64.2 | 98.2 |
| Anhydride | succinic anhydride (1185) | 2 | 64.1 | 98.6 |
| Anhydride | 2,3-dimethylmaleic anhydride (1189) | 0.5 | 63.5 | 98.4 |
| Anion receptor | tris(pentafluroophenyl) borane (1220) | 0.5 | 63.4 | 98.3 |
| Imide | N-(benzyloxycarbonyloxy) succinimide (1249) | 2 | 63.0 | 98.7 |
| Imide | 1-acetyl-2-pyrrolidone(1219) | 0.5 | 62.6 | 97.8 |
| B-containing | vinylboronic acid pinacol ester (1257) | 0.5 | 62.1 | 99.4 |
| B-containing | tris(pentafluorophenyl) borane (1258) | 2 | 61.9 | 98.5 |
| Imide | succinimide (1245) | 2 | 61.9 | 97.2 |
| Anhydride | succinic anhydride (1185) | 0.5 | 61.3 | 98.8 |
| Anhydride | maleic anhydride (1239) | 2 | 60.8 | 98.1 |
| Imide | succinimide (1211) | 0.5 | 59.6 | 97.9 |
| Anhydride | maleic anhydride (1239) | 0.5 | 59.0 | 98.0 |
| Carbonate | 6,7-dimethyl-2,4-dioxabicyclo[3.2.0]hept6-en-3-one (1260) | 0.5 | 58.8 | 98.0 |

Certain additives, such as 2% lithium nitrate, 2% fluoroethylene carbonate, and 2% poly(methyl vinyl ether-alt-maleic anhydride), provide about 50% improvement in capacity retention at cycle 100 as compared to the EC/EMC control formulation without the additives. Several other additive provide from about 13% improvement to about 47% improvement in capacity retention at cycle 100 as compared to the EC/EMC control formulation without the additives.

Further, almost all of the additives provide some improvement in the coulombic efficiency at cycle 100 as compared to the EC/EMC control formulation without the additives. Of course, the coulombic efficiency of the control formulation is already quite high (97.4%) and so the additives can provide improvement of a few percent. Still, it is notable that virtually all of the additives in Table 4 did improve the coulombic efficiency at cycle 100.

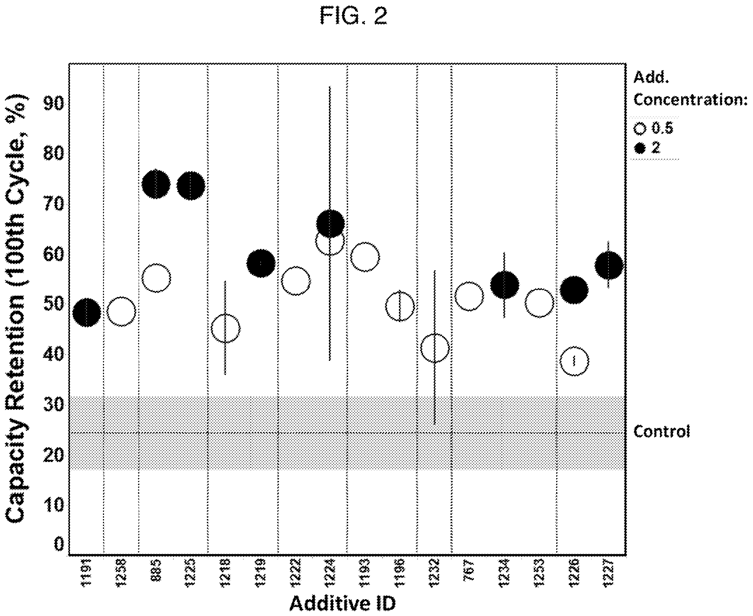

Table 5 presents additives in non-EC containing formulations that result in similar or improved coulombic efficiency (CE) and improved cycle life compared to a non-EC based electrolyte (propylene carbonate / ethyl methyl carbonate (PC/EMC)) without the additives. Additives were formulated in PC/EMC (1:4 by volume) with 1M LiPF₆ at the stated weight percent. All results are averages of two cells. The data in Table 5 are sorted in order of decreasing capacity retention, with the control formulation having no additives listed first. Figure 2 graphically depicts the capacity retention results of Table 5, with the additives in Figure 2 identified by the ID numbers presented parenthetically in Table 5. Table 5 facilitates identification of concentration dependence or inverse dependence in the additives. The capacity retention of the control is labeled.

**Table 5. Performance of additives in PC based electrolyte**

| **Additive Category** | **Additive Name (Additive ID)** | **Additive wt%** | **Cap. Reten. (%, 100th)** | **CE (%, 100th)** |
|---|---|---|---|---|
| --- | None | 0 | 24.4 ± 7.4 | 97.5 |
| Carbonate | vinylene carbonate (885) | 2 | 74.0 | 99.6 |
| Carbonate | fluoroethylene carbonate (1225) | 2 | 73.7 | 99.6 |
| Inorganic | lithium nitrate (1224) | 2 | 66.1 | 97.8 |
| Inorganic | lithium nitrate (1224) | 0.5 | 62.7 | 97.4 |
| Lactone | 3,6-dimethyl-1,4-dioxane-2,5-dione (1193) | 0.5 | 59.5 | 100.0 |
| Imide | 1-acetyl-2-pyrrolidone (1219) | 2 | 58.3 | 96.9 |
| Weak Lewis Base | hexamethyl-phosphoramide (1227) | 2 | 57.9 | 98.8 |
| Carbonate | vinylene carbonate (885) | 0.5 | 55.3 | 96.7 |
| Inorganic | sodium perchlorate (1222) | 0.5 | 54.8 | 99.4 |
| Polymer | poly(vinyl acetate) (1234) | 2 | 53.9 | 99.7 |
| Weak Lewis Base | tris(2,2,2-trifluoroethyl)phosphite (1226) | 2 | 52.9 | 99.5 |
| Polymer | poly(1-vinylpyrrolidone-co-vinyl acetate) (767) | 0.5 | 51.7 | 99.7 |
| Polymer | polyacrylonitrile (1253) | 0.5 | 50.4 | 99.8 |
| Lactone | α-methylene-γ-butyrolactone (1196) | 0.5 | 49.6 | 98.2 |
| B-containing | tris(pentafluorophenyl) borane (1258) | 0.5 | 48.6 | 98.9 |
| Anhydride | phenylmaleic anhydride (1191) | 2 | 48.4 | 97.2 |
| Imide | N-acetylcaprolactam (1218) | 0.5 | 45.3 | 99.6 |
| --- | vinyl acetate (1232) | 0.5 | 41.4 | 98.9 |
| Weak Lewis Base | tris(2,2,2-trifluoroethyl)phosphite (1226) | 0.5 | 38.7 | 99.5 |

Certain additives, such as 2% lithium nitrate and 2% fluoroethylene carbonate, provide at least about 175% improvement in capacity retention at cycle 100 as compared to the PC/EMC control formulation without the additives. Several other additive provide from about 58% improvement to about 150% improvement in capacity retention at cycle 100 as compared to the PC/EMC control formulation without the additives.

Further, almost all of the additives provide some improvement in the coulombic efficiency at cycle 100 as compared to the PC/EMC control formulation without the additives. Of course, the coulombic efficiency of the control formulation is already quite high (97.5%) and so the additives can provide improvement of a few percent. Still, it is notable that virtually all of the additives in Table 5 did improve the coulombic efficiency at cycle 100.

Table 6 presents additives in non-EC containing formulations that result in similar coulombic efficiency (CE) and similar cycle life compared to an EC-based electrolyte (EC/EMC) without the additives. Table 6 is similar to Table 3 in that it compares data from Table 5 with the control of Table 4 to provide a more practical comparison to a conventional formulation. The additives in Table 6 do not appear to require EC to form the SEI as the solvent system for the additive electrolytes was PC/EMC.

**Table 6. Additives in non-EC formulations compared to EC-based control**

| **Additive Category** | **Additive Name** | **Additive wt%** | **Cap. Reten. (%, 100th)** | **CE (%, 100th)** |
|---|---|---|---|---|
| --- | none | 0 | 51.2 ± 5.3 | 97.4 |
| Carbonate | vinylene carbonate | 2 | 74.0 | 99.6 |
| Carbonate | fluoroethylene carbonate | 2 | 73.7 | 99.6 |
| Inorganic | lithium nitrate | 2 | 66.1 | 97.8 |
| Inorganic | lithium nitrate | 0.5 | 62.7 | 97.4 |
| Lactone | 3,6-dimethyl-1,4-dioxane-2,5-dione | 0.5 | 59.5 | 100.0 |
| Imide | 1-acetyl-2-pyrrolidone | 2 | 58.3 | 96.9 |
| Weak Lewis Base | hexamethyl-phosphoramide | 2 | 57.9 | 98.8 |
| Carbonate | vinylene carbonate | 0.5 | 55.3 | 96.7 |
| Inorganic | sodium perchlorate | 0.5 | 54.8 | 99.4 |
| Polymer | poly(vinyl acetate) | 2 | 53.9 | 99.7 |
| Weak Lewis Base | tris(2,2,2-trifluoroethyl)phosphite | 2 | 52.9 | 99.5 |
| Polymer | poly(1-vinylpyrrolidone-co-vinyl acetate) | 0.5 | 51.7 | 99.7 |
| Polymer | polyacrylonitrile | 0.5 | 50.4 | 99.8 |
| Lactone | α-Methylene-γ-butyrolactone | 0.5 | 49.6 | 98.2 |
| B-containing | tris(pentafluorophenyl) borane | 0.5 | 48.6 | 98.9 |
| Anhydride | phenylmaleic anhydride | 2 | 48.4 | 97.2 |

In certain embodiments, useful additives share common chemical features that facilitate the formation of a mechanically robust SEI. Generally, no negative effect on overall cell capacity was observed with the use of the additive formulations of the embodiments disclosed herein as compared to the control electrolytes

Tables 1 through 6 contain categories for additives. These categories are not intended to be limiting. The category names identify a common chemical trait among certain of the additives, but such category name does not necessarily identify the dominant, exclusive, or necessary chemical trait for the additive to improve performance.

"Anhydride" is a category of additives, and it includes additives with anhydride functionality. For example, glutaric anhydride, itaconic anhydride, succinic anhydride, and 2,3-dimethylmaleic anhydride are preferred anhydrides. A particularly preferred anhydride is phenylmaleic anhydride, which can be represented by the following formula:

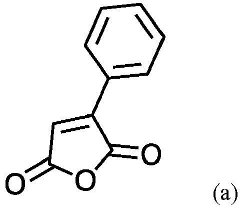

"Anion receptor" " is a category of additives, and it includes additives that act as an anion receptor. For example, triisopropyl borate and pentafluroophenyl borane are preferred anion receptors.

"B-containing" is a category of additives, and it includes additives that contain boron. For example, lithium difluoro(oxalato)borate, lithium difluoro(oxalato)borate, and vinylboronic acid pinacol ester are preferred B-containing additives. A particularly preferred B-containing additive is tris(pentafluorophenyl) borane, which can be represented by the following formula:

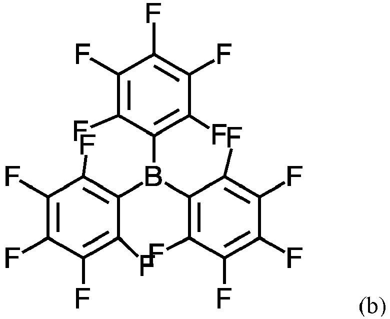

"Carbonate" is a category of additives, and it includes additives with carbonate functionality. For example, vinylene carbonate, 4,4-dimethyl-5-methylene-(1,3) dioxolan-2-one, and 6,7-dimethyl-2,4-dioxabicyclo[3.2.0]hept6-en-3-one are preferred carbonates. A particularly preferred carbonate is fluoroethylene carbonate, which can be represented by the following formula:

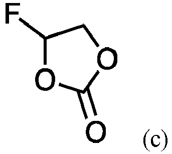

"Imide" is a category of additives, and it includes additives with imide functionality. For example, succinimide, N-(benzyloxycarbonyloxy)succinimide, and N-acetylcaprolactam are preferred imides. A particularly preferred imide is 1-acetyl-2-pyrrolidone, which can be represented by the following formula:

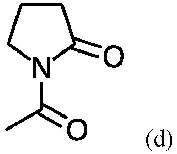

"Inorganic" is a category of additives, and it includes additives with an inorganic species, such as an alkali metal. A particularly preferred inorganic is lithium nitrate (LiNO₃). Another particularly preferred inorganic is sodium perchlorate (NaClO₄).

"Isocyanate" is a category of additives, and it includes additives with isocyanate functionality. For example, 3 - fluorophenyl isocyanate and 2,4,5-trifluorophenyl isocyanate are preferred isocyanates.

"Lactone" is a category of additives, and it includes additives with lactone functionality. A particularly preferred lactone is 3,6-dimethyl-1,4-dioxane-2,5-dione, which can be represented by the following formula:

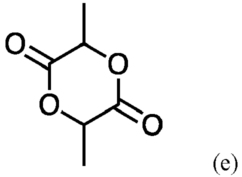

Another particularly preferred lactone is α-methylene-α-butyrolactone, which can be represented by the following formula:

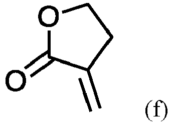

"Polymer" is a category of additives, and it includes polymeric additives. A particularly preferred polymer is poly(vinyl acetate). Another particularly preferred polymer is poly(1-vinylpyrrolidone-co-vinyl acetate). Another particularly preferred polymer is polyacrylonitrile.

"Weak Lewis base" is a category of additives, and it includes additives that act as a weak Lewis base. A particularly preferred weak Lewis base is hexamethyl-phosphoramide, which can be represented by the following formula:

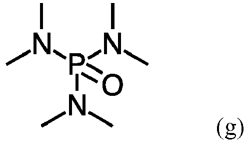

Another particularly preferred weak Lewis base is tris(2,2,2-trifluoroethyl)phosphite, which can be represented by the following formula:

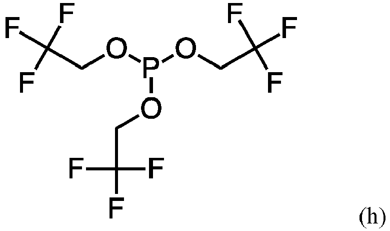

Among the embodiments of additives demonstrating improvement over control electrolyte formulations, lithium nitrate performed in an unexpected manner. While lithium nitrate has been used in conjunction with lithium anodes, it is unexpected that lithium nitrate would exhibit superior performance in conjunction with a silicon anode, and in particular in an electrolyte formulation that does not contain ethylene carbonate. Some references disclose the additive LiNO₃, typically in conjunction with lithium-sulfur electrodes. For example, both Azimi et al. Journal of The Electrochemical Society, 162 (1) A64-A68 (2015) and Kim et al. Ionics (2013) 19:1795-1802 disclose the formation of a protective layer on the lithium anode to reduce reaction of lithium polysulfide with the lithium metal and to prevent damage to the lithium metal during cycling. A similar effect to reduce lithium metal reactivity with sulfur containing intermediates is expected in other lithium sulfur battery systems, such as those disclosed in US 7,358,012. Yet, the lithium nitrate is not known as an SEI forming material on silicon, where the main function of the SEI is to prevent reduction of the bulk electrolyte solvents. It is not obvious to expect that lithium nitrate would provide a more mechanically robust SEI layer that would withstand the large volumetric changes of the silicon on charge and discharge.

The amount of additives present in the electrolyte formulations disclosed herein is expressed in terms of a weight percent of the compound relative to a total weight of the electrolyte solution (or wt%). For example, an amount of an additive can be in the range of about 0.01 wt% to about 5.0 wt%, such as from about 0.1 wt% to about 5.0 wt%, from about 0.1 wt% to about 2.0 wt%, from about 0.5 wt.% to about 2.0 wt%. In the case of a combination of multiple additives, a total amount of the additives can be in the range of about 0.01 wt% to about 5.0 wt%, such as from about 0.1 wt% to about 5.0 wt%, from about 0.1 wt% to about 2.0 wt%, from about 0.5 wt.% to about 2.0 wt%.

The lithium-containing additives disclosed herein, such as lithium nitrate, are present in concentrations below the concentration of the lithium salts present in the electrolyte solution that are the source of lithium ions for the battery cell. That is, the lithium ion source compound, such as LiPF₆, is present in the electrolyte solution at a 1M concentration. Depending on the choice of organic solvent for an exact conversion, a 1M concentration of LiPF₆ is equal to about 14 wt%. Thus, a typical lithium salt is present at a concentration about 7 times to about 30 times greater than the concentration of the additives disclosed herein. Further, the lithium nitrate additive was not soluble in the organic solvent blends used herein at the concentrations used herein. In other words, the 2.0 wt% concentration of lithium nitrate exceeded the solubility limit for the organic solvent blend. This is a noteworthy contrast to the lithium ion source compound (LiPF₆) used in the electrolyte formulation.

While the methods disclosed herein have been described with reference to particular operations performed in a particular order, it will be understood that these operations may be combined, sub-divided, or re-ordered to form an equivalent method without departing from the teachings of the invention.

## Claims

1. A battery comprising:
a first electrode,
a second electrode comprising silicon, and
an electrolyte solution formulated from a lithium salt, an organic solvent, and an additive, wherein the additive comprises lithium nitrate at a concentration exceeding the solubility limit for the organic solvent.

2. The battery of claim 1 wherein the organic solvent is not ethylene carbonate.

3. The battery of claim 2 wherein the organic solvent comprises propylene carbonate.

4. The battery of claim 1 wherein the first electrode comprises lithium and manganese.

5. The battery of claim 1 wherein the first electrode comprises lithium, manganese, and nickel.

6. The battery of claim 1 wherein the first electrode comprises lithium, manganese, nickel, and cobalt.

7. The battery of claim 6 wherein the first electrode comprises LiNi_{0.4}Mn_{0.4}Co_{0.2}O₂.

8. The battery of claim 1 wherein the second electrode is a silicon alloy.

9. The battery of claim 1 wherein the additive comprises at least 0.5 weight percent of lithium nitrate.

10. The battery of claim 9 wherein the organic solvent is not ethylene carbonate.

11. The battery of claim 9 wherein the additive comprises at least 1.0 weight percent of lithium nitrate.

12. The battery of claim 9 wherein the additive comprises at least 2.0 weight percent of lithium nitrate.

13. The battery of claim 12 wherein the first electrode comprises LiNi_{0.4}Mn_{0.4}Co_{0.2}O₂.

## Patentansprüche

1. Batterie mit:
einer ersten Elektrode,
einer zweiten Elektrode, die Silizium aufweist, und
einer Elektrolytlösung, formuliert aus einem Lithiumsalz, einem organischen Lösungsmittel und einem Additiv, wobei das Additiv Lithiumnitrat in einer Konzentration umfasst, die die Löslichkeitsgrenze für das organische Lösungsmittel überschreitet.

2. Batterie nach Anspruch 1, wobei das organische Lösungsmittel nicht Ethylencarbonat ist.

3. Batterie nach Anspruch 2, wobei das organische Lösungsmittel Propylencarbonat aufweist.

4. Batterie nach Anspruch 1, wobei die erste Elektrode Lithium und Mangan aufweist.

5. Batterie nach Anspruch 1, wobei die erste Elektrode Lithium, Mangan und Nickel aufweist.

6. Batterie nach Anspruch 1, wobei die erste Elektrode Lithium, Mangan, Nickel und Kobalt aufweist.

7. Batterie nach Anspruch 6, wobei die erste Elektrode LiNi_{0,4}Mn_{0,4}Co_{0,2}O₂ aufweist.

8. Batterie nach Anspruch 1, wobei die zweite Elektrode eine Siliziumlegierung ist.

9. Batterie nach Anspruch 1, wobei das Additiv mindestens 0,5 Gewichtsprozent Lithiumnitrat aufweist.

10. Batterie nach Anspruch 9, wobei das organische Lösungsmittel nicht Ethylencarbonat ist.

11. Batterie nach Anspruch 9, wobei das Additiv mindestens 1,0 Gewichtsprozent Lithiumnitrat aufweist.

12. Batterie nach Anspruch 9, wobei das Additiv mindestens 2,0 Gewichtsprozent Lithiumnitrat aufweist.

13. Batterie nach Anspruch 12, wobei die erste Elektrode LiNi_{0,4}Mn_{0,4}Co_{0,2}O₂ aufweist.

## Revendications

1. Batterie comprenant :
une première électrode,
une seconde électrode comprenant du silicium, et
une solution d'électrolyte formulée à partir d'un sel de lithium, d'un solvant organique et d'un additif, l'additif comprenant du nitrate de lithium à une concentration dépassant la limite de solubilité pour le solvant organique.

2. Batterie selon la revendication 1, dans laquelle le solvant organique n'est pas le carbonate d'éthylène.

3. Batterie selon la revendication 2, dans laquelle le solvant organique comprend le carbonate de propylène.

4. Batterie selon la revendication 1, dans laquelle la première électrode comprend du lithium et du manganèse.

5. Batterie selon la revendication 1, dans laquelle la première électrode comprend du lithium, du manganèse et du nickel.

6. Batterie selon la revendication 1, dans laquelle la première électrode comprend du lithium, du manganèse, du nickel et du cobalt.

7. Batterie selon la revendication 6, dans laquelle la première électrode comprend LiNi_{0,4}Mn_{0,4}Co_{0,2}O₂.

8. Batterie selon la revendication 1, dans laquelle la seconde électrode est un alliage de silicium.

9. Batterie selon la revendication 1, dans laquelle l'additif comprend au moins 0,5 pourcent en poids de nitrate de lithium.

10. Batterie selon la revendication 9, dans laquelle le solvant organique n'est pas le carbonate d'éthylène.

11. Batterie selon la revendication 9, dans laquelle l'additif comprend au moins 1,0 pourcent en poids de nitrate de lithium.

12. Batterie selon la revendication 9, dans laquelle l'additif comprend au moins 2,0 pourcent en poids de nitrate de lithium.

13. Batterie selon la revendication 12, dans laquelle la première électrode comprend LiNi_{0,4}Mn_{0,4}Co_{0,2}O₂.
